# EUROPÄISCHE PATENTANMELDUNG

(11) **EP 0 724 978 A1**
(43) Veröffentlichungstag der Anmeldung: **07.08.1996**
(21) Anmeldenummer: 95118415.9
(22) Anmeldetag: 23.11.1995
(51) Int. Cl.: B60K 6/04, F16D 41/04

(54) **Parallelhybridantrieb für ein Kraftfahrzeug**

(30) Priorität: 03.02.1995 DE 19503501
(71) Anmelder: FICHTEL & SACHS AG, D-97424 Schweinfurt (DE)
(72) Erfinder: Röder, Manfred, Dipl.-Ing., D-97525 Schwebheim (DE); Rüthlein, Alfred, Dipl.-Ing., D-97526 Sennfeld (DE); Schmidt-Brücken, Hans-Joachim, Dipl.-Physiker, D-97505 Geldersheim (DE); Schulz-Andres, Heiko, Dipl.-Ing., D-97490 Poppenhausen (DE); Tulaczko, Boleslaw, Dipl.-Ing., D-97464 Niederwerrn (DE); Welke, Knut, Dipl.-Ing., D-97456 Dittelbrunn (DE); Wirth, Thomas, Dipl.-Ing., D-97523 Schwanfeld (DE)

(57) **Zusammenfassung**

Der Parallelhybridantrieb für ein Kraftfahrzeug umfaßt einen Verbrennungsmotor (11), eine elektrische Maschine (7) und ein Schaltgetriebe (1). Eine Trennkupplung (5) verbindet die elektrische Maschine (7) über einen ersten Drehmomentübertragungsweg mit dem Verbrennungsmotor (11) und über einen zweiten Drehmomentübertragungsweg mit der elektrischen Maschine (7). In dem ersten Drehmomentübertragungsweg ist eine als Freilauf ausgebildete, drehrichtungsgeschaltete Kupplung (9) angeordnet, die bei Drehantrieb vom Verbrennungsmotor (11) her geschlossen und bei Drehantrieb von der Schalt- und Trennkupplung (5) her geöffnet ist. Die drehrichtungsgeschaltete Kupplung (9) bedarf keiner externen Ausrücksysteme. Zweckmäßigerweise ist der drehrichtungsgeschalteten Kupplung (9) eine Überbrückungskupplung (23) zugeordnet, die zum Anlassen des Verbrennungsmotors (11) durch die elektrische Maschine (7) sowie für den Bremsbetrieb des Kraftfahrzeugs durch den Verbrennungsmotor (11) eingekuppelt wird.

## Beschreibung

Die Erfindung betrifft einen Parallelhybridantrieb für ein Kraftfahrzeug.

Aus DE-C-33 20 950 und DE-A-37 37 192 sind Hybridantriebe für Kraftfahrzeuge bekannt, bei welchen das Kraftfahrzeug sowohl von einem Verbrennungsmotor als auch einem Elektromotor aus angetrieben werden kann. Der Elektromotor ist zwischen dem Verbrennungsmotor und einem mehrgängigen Schaltgetriebe angeordnet, wobei im Drehmomentübertragungsweg sowohl zwischen dem Verbrennungsmotor und dem Elektromotor als auch zwischen dem Elektromotor und der Eingangswelle des Schaltgetriebes eine Trennkupplung in Form einer Trocken-Reibungskupplung angeordnet ist. Die beiden Kupplungen werden durch koaxial zueinander und zur Getriebeeingangswelle angeordnete Ausrückorgane gesteuert. Beim Antrieb des Kraftfahrzeugs durch den Elektromotor ist die zwischen dem Elektromotor und dem Verbrennungsmotor angeordnete Trennkupplung geöffnet. Die zwischen dem Elektromotor und dem Schaltgetriebe angeordnete Kupplung wird als Trenn- und Schaltkupplung für den Gangwechsel und beim Anfahren ausgenutzt. Bei dem bekannten Parallelhybridantrieb müssen nicht nur zwei gesondert schaltbare Reibungskupplungen unter ohnehin räumlich begrenzten Bedingungen zwischen Schaltgetriebe und Verbrennungsmotor untergebracht werden, sondern auch zusätzliche Ausrückorgane für die Steuerung der Trennkupplungen.

Es ist Aufgabe der Erfindung, einen Parallelhybridantrieb für ein Kraftfahrzeug zu schaffen, der eine bessere Ausnutzung zur Verfügung stehenden Bauraums im Bereich zwischen Verbrennungsmotor und Getriebe erlaubt.

Die Erfindung geht aus von einem Parallelhybridantrieb für ein Kraftfahrzeug, welcher umfaßt:
einen Verbrennungsmotor,
eine elektrische Maschine,
ein Getriebe, dessen Eingangswelle und Ausgangswelle mit änderbarem Drehzahlverhältnis miteinander verbunden sind, eine einerseits mit der Eingangswelle des Getriebes drehfest verbundene Trennkupplung, die andererseits über einen ersten Drehmomentübertragungsweg mit dem Verbrennungsmotor und über einen zweiten Drehmomentübertragungsweg mit der elektrischen Maschine verbunden ist und
eine weitere Kupplung in dem ersten Drehmomentübertragungsweg.

Gemäß der Erfindung ist vorgesehen, daß die weitere Kupplung als drehrichtungsgeschaltete Kupplung ausgebildet ist, die bei Drehantrieb von dem Verbrennungsmotor her geschlossen und bei Drehantrieb von der Trennkupplung her geöffnet ist.

Eine derartige drehrichtungsgeschaltete Kupplung, auch als Freilauf bekannt, öffnet im Motorbetrieb der elektrischen Maschine selbsttätig und kuppelt den Verbrennungsmotor von der Eingangswelle des Getriebes ab, d.h. bei Antrieb des Kraftfahrzeugs ausschließlich durch die elektrische Maschine ist der Freilauf selbsttätig abgeschaltet. Bei Antrieb des Kraftfahrzeugs ausschließlich durch den Verbrennungsmotor ist die elektrische Maschine stromlos geschaltet oder arbeitet als Generator, wobei dann der Freilauf selbsttätig eingekuppelt ist. Auch ein Antriebsbetrieb gleichzeitig sowohl durch den Verbrennungsmotor als auch durch die elektrische Maschine ist bei geeigneter Aufteilung der Antriebsmomente und Drehzahlen möglich. Da für die Umschaltung des Freilaufs im Gegensatz zu herkömmlich benutzten Trennkupplungen keine Ausrückorgane erforderlich sind, kann der Bauraum zwischen dem Verbrennungsmotor und dem Getriebe besser als bisher ausgenutzt werden.

Bei der drehrichtungsabhängig geschalteten Kupplung kann es sich um herkömmliche Freiläufe, wie zum Beispiel Klemmfreiläufe, insbesondere Klemmrollen- oder Klemmkörperfreiläufe handeln. Geeignet sind auch Reibfreiläufe, Zahnfreiläufe und gegebenenfalls auch Klinkenfreiläufe.

Die zwischen dem Verbrennungsmotor und dem Elektromotor wirksame Trennkupplung ist bei den aus DE-C-33 20 950 und DE-A-37 37 192 bekannten Hybridantrieben radial innerhalb eines von der elektrischen Maschine umschlossenen Hohlraums angeordnet. Die Unterbringung der Reibungskupplung und ihrer Ausrückorgane bedingt einen vergleichsweise großen Durchmesser der elektrischen Maschine. Der bereits durch die drehrichtungsabhängig schaltbare Kupplung besser als bisher ausgenutzte Bauraum läßt sich noch günstiger ausnutzen, ohne daß dies auf Kosten der Leistungsfähigkeit der elektrischen Maschine ginge, wenn die elektrische Maschine als Permanentmagnet-Läufermaschine ausgebildet ist, deren Permanentmagnetläufer die drehrichtungsgeschaltete Kupplung umschließt. Dies gilt insbesondere, wenn der Permanentmagnetläufer ein Außenläufer ist, der einen Ständer der elektrischen Maschine radial außen umschließt. Der Außenläufer kann unmittelbar als Träger der Schalt- und Trennkupplung ausgenutzt werden, wobei auch der Durchmesser der Trennkupplung kaum Bauraumbegrenzungsproblemen unterworfen ist.

Bei dem bekannten Hybridantrieb erlaubt es die zwischen dem Verbrennungsmotor und der elektrischen Maschine angeordnete Trennkupplung, daß die elektrische Maschine zugleich als Anlassermotor für den Verbrennungsmotor ausgenutzt wird. Darüber hinaus kann der Verbrennungsmotor aufgrund seiner in beiden Drehrichtungen drehfest Verbindung zum Getriebe auch bremsend wirksam werden. Um auch bei dem erfindungsgemäßen Hybridantrieb trotz des Freilaufs diese Eigenschaften realisieren zu können, ist in einer bevorzugten Ausgestaltung vorgesehen, daß die drehrichtungsgeschaltete Kupplung durch eine steuerbare Überbrückungskupplung überbrückbar ist. Da die Überbrückungskupplung nur in speziellen Betriebssituationen wirksam ist und in diesen Betriebssituationen das zu übertragende Drehmoment beträchtlich kleiner ist als im Antriebsbetrieb des Verbrennungsmotors, kann die Überbrückungskupplung schwächer dimensioniert werden, als die bei den bekannten Parallelhybridantrieben bisher benutzte Reibungs-Trennkupplungen. Bei der Überbrückungskupplung kann es sich beispielsweise um eine Formschlußkupplung, aber auch gleichfalls um eine Reibungskupplung handeln. Geeignet sind auch als schaltbare Freiläufe ausgebildete Überbrückungskupplungen, deren Freilaufdrehsinn dem Freilaufdrehsinn der drehrichtungsschaltbaren Kupplung entgegengesetzt ist. Auch hier kann der schaltbare Freilauf als Klinkenfreilauf, Klemmfreilauf, Klemmrollen- oder Klemmkörperfreilauf oder als Reibfreilauf oder Zahnfreilauf ausgebildet sein. Es versteht sich, daß die Überbrückungskupplung auch in die erfindungsgemäß vorgesehene drehrichtungsgeschaltete Kupplung integriert sein kann, beispielsweise in der Form, daß die drehrichtungsabhängige Kupplung als in seiner Sperrichtung umschaltbarer oder in eine vollständige blockierende Stellung schaltbarer Freilauf ausgebildet ist.

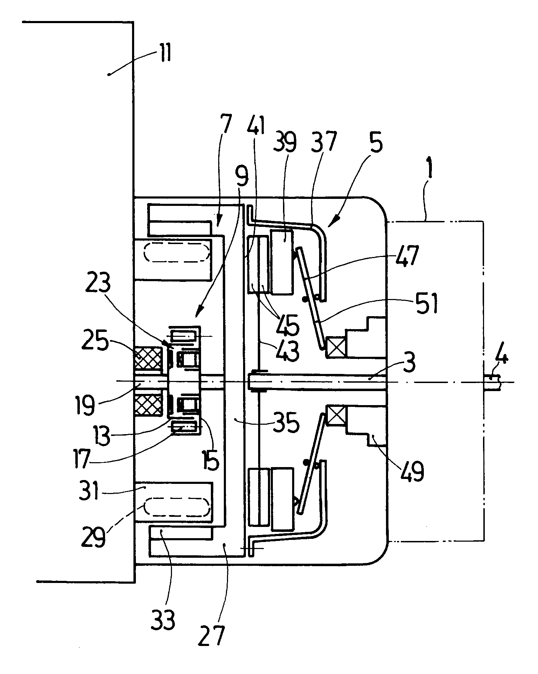

Im folgenden wird ein Ausführungsbeispiel der Erfindung anhand einer Zeichnung näher erläutert. Die Zeichnung zeigt in schematischer Form einen Parallelhybridantrieb gemäß der Erfindung mit einem blockierbaren Freilauf.

Der Parallelhybridantrieb umfaßt ein Schaltgetriebe 1, bei dem es sich um ein manuell oder automatisiert schaltbares Schaltgetriebe oder aber um ein Automatikgetriebe handeln kann, und das ein änderbares Drehzahlverhältnis seiner Eingangswelle 3 zu seiner bei 4 angedeuteten, mit Antriebsrädern des Kraftfahrzeugs verbundenen Ausgangswelle hat. Über eine herkömmliche Trennkupplung 5 ist die Eingangswelle 3 über einen ersten Drehmomentübertragungsweg mit einer elektrischen Maschine 7 und über einen zweiten, eine überbrückbare Freilaufkupplung 9 enthaltenden Drehmomentübertragungsweg mit einem Verbrennungsmotor 11 verbunden.

Die überbrückbare Freilaufkupplung 9 umfaßt einen selbsttätig arbeitenden Freilauf, hier einen Klemmkörper-Freilauf, mit zwischen einem Eingangsteil 13 und einem Ausgangsteil 15 wirksamen Klemmkörpern 17, die bei Antrieb der Freilaufkupplung 9 von einer bei 19 angedeuteten Kurbelwelle des Verbrennungsmotors 11 her das Eingangsteil 13 drehfest mit dem Ausgangsteil 15 kuppeln und bei Antrieb der Freilaufkupplung 9 vom Ausgangsteil 15 her die Freilaufkupplung 9 öffnen. Die Freilaufkupplung 9 umfaßt eine steuerbare Überbrückungskupplung 23, hier in Form einer durch einen Stellantrieb 25, beispielsweise einem Elektromagneten ein- und ausschaltbaren Klauenkupplung, die im eingeschalteten Zustand das Ausgangsteil 15 in beiden Drehrichtungen drehfest mit dem Eingangsteil 13 kuppelt.

Das Ausgangsteil 15 ist mit einem als Permanentmagnet-Außenläufer ausgebildeten Läufer 27 der elektrischen Maschine 7 drehfest verbunden. Der Läufer 27 umschließt einen seinerseits die Freilaufkupplung 9 umschließenden, mit Feldwicklungen 29 versehenen, am Gehäuse des Verbrennungsmotors 11 (bzw. des Schaltgetriebes 1) gehaltenen Ständer 31 der elektrischen Maschine 7 und trägt in einem den Ständer 31 radial außen umschließenden zylindrischen Wandteil eine Vielzahl in Umfangsrichtung mit abwechselnder Polarität angeordnete Dauermagnete 33.

Der die Dauermagnete 33 tragende Wandteil ist axial einseitig an einer mit dem Ausgangsteil 15 der Freilaufkupplung 9 fest verbundenen Scheibe 35 gehalten, die ihrerseits ein Kupplungsgehäuse 37 der Trennkupplung 5 trägt. In dem Kupplungsgehäuse 37 ist relativ dazu drehfest, jedoch axial verlagerbar, eine Anpreßplatte 39 angeordnet, die einer an der Scheibe 35 vorgesehenen Gegenanpreßfläche 41 gegenüberliegt. Eine gegebenenfalls mit einem Drehschwingungsdämpfer versehene, drehfest auf der Eingangswelle 3 geführte Kupplungsscheibe 43 greift mit ihren Reibbelägen 45 zwischen die Anpreßplatte 39 und die Gegenanpreßfläche 41 und wird von einer zwischen dem Kupplungsgehäuse 37 und der Anpreßplatte 39 eingespannten Membranfeder 47 in üblicher Weise reibschlüssig eingespannt. Ein herkömmliches, gegebenenfalls mittels eines Stellantriebs automatisiertes Ausrückersystem 49 wirkt auf Federzungen 51 der Membranfeder 47 und entlastet zum Auskuppeln der Schalt- und Trennkupplung 5 die Kupplungsscheibe 43 von der Kraft der Membranfeder 47. Es versteht sich, daß die Trennkupplung 5 auch als hydrodynamische Kupplung oder als Drehmomentwandler ausgebildet sein kann.

Das Kraftfahrzeug kann wahlweise über die dann motorisch arbeitende elektrische Maschine 7 oder vom Verbrennungsmotor 11 allein angetrieben werden. Beim alleinigen Antrieb durch die elektrische Maschine 7 steht der Verbrennungsmotor 11, und die Freilaufkupplung 9 ist ausgekuppelt. Beim alleinigen Antrieb des Kraftfahrzeugs durch den Verbrennungsmotor 11 ist die elektrische Maschine 7 nicht erregt oder arbeitet als Generator, und die Freilaufkupplung 9 ist geschlossen. Das Kraftfahrzeug kann bei geschlossener Überbrückungskupplung 23 aber auch durch die motorisch wirkende elektrische Maschine 7 und den Verbrennungsmotor 11 gleichzeitig angetrieben werden. Die Überbrückungskupplung 23 muß in dieser Betriebssituation jedoch nicht zwingend geschlossen werden, solange das Drehmoment oder/und die Drehzahl des Verbrennungsmotors 11 überwiegt und die Freilaufkupplung 9 dementsprechend geschlossen ist.

In jedem der vorstehend erwähnten Antriebszustände wird die Trennkupplung 5 zumindest beim Wechseln der Gänge des Getriebes 1 über das Ausrückersystem 49 ausgekuppelt. Die Trennkupplung 5 wird darüber hinaus zumindest beim Antrieb durch den Verbrennungsmotor 11 auch als Anfahrkupplung herkömmlich ausgenutzt. Beim Antrieb durch die elektrische Maschine 7 kann zum Anfahren die Drehzahl und/oder das Drehmoment der elektrischen Maschine 7 gesteuert werden; aber auch hier kann die Kupplung 5 als Anfahrkupplung mit ausgenutzt werden.

Die Überbrückungskupplung 23 erlaubt das Ausnutzen der elektrischen Maschine 7 zum Anlassen des Verbrennungsmotors 11. Für den Anlaßvorgang befindet sich das Getriebe 1 in seiner neutralen Schaltstellung und/oder die Trennkupplung 5 ist geöffnet. Bei geschlossener Überbrückungskupplung 23 wirkt dann die elektrische Maschine 7 als Anlassermotor für den Verbrennungsmotor 11. Während des Fahrbetriebs bei Antrieb durch die elektrische Maschine 7 kann zum Ausnutzen der Bremswirkung des Verbrennungsmotors 11 die Überbrückungskupplung 23 geschlossen werden, beispielsweise abhängig von der Stellung eines nicht näher dargestellten Fahrpedals des Kraftfahrzeugs, das in seiner Ruhestellung bei sich bewegendem Fahrzeug über eine nicht näher dargestellte Steuerung die Überbrückungskupplung 23 schließt.

Es versteht sich, daß die Freilaufkupplung 9 auch entsprechend einem anderen Freilaufprinzip arbeiten kann, beispielsweise als Klinkenfreilauf oder Reibungsfreilauf oder Zahnfreilauf ausgebildet sein kann. Auch die Überbrückungskupplung 23 kann in anderer Weise ausgebildet sein. Beispielsweise kann sie nach dem Prinzip einer Reibungskupplung arbeiten oder ihrerseits als steuerbarer Freilauf mit zur Freilaufrichtung der Kupplung 9 entgegengesetzter Freilaufrichtung ausgebildet sein. Der Stellantrieb 25 kann darüber hinaus als pneumatischer oder hydraulischer Stellantrieb ausgebildet sein. Anstelle durch die Überbrückungskupplung 23 kann die Anlaßfunktion und die Bremsfunktion des Verbrennungsmotors 11 auch anderweitig realisiert werden, beispielsweise durch einen gesonderten Anlassermotor, wobei dann die Überbrückungskupplung 23 entfallen kann.

Es versteht sich, daß die elektrische Maschine 7 beim Antrieb des Kraftfahrzeugs durch den Verbrennungsmotor 11 als Generator betrieben wird und Strom für das Bordnetz oder zum Laden der für den elektromotorischen Antrieb erforderlichen Batterien liefert.

## Patentansprüche

1. Parallelhybridantrieb für ein Kraftfahrzeug, umfassend
- einen Verbrennungsmotor (11),
- eine elektrische Maschine (7),
- ein Getriebe (1), dessen Eingangswelle (3) und Ausgangswelle (4) mit änderbarem Drehzahlverhältnis miteinander verbunden sind,
- eine einerseits mit der Eingangswelle (3) des Getriebes (1) drehfest verbundene Trennkupplung (5), die andererseits über einen ersten Drehmomentübertragungsweg mit dem Verbrennungsmotor (11) und über einen zweiten Drehmomentübertragungsweg mit der elektrischen Maschine (7) verbunden ist, und
- eine weitere Kupplung in dem ersten Drehmomentübertragungsweg,
dadurch gekennzeichnet, daß die weitere Kupplung als drehrichtungsgeschaltete Kupplung (9) ausgebildet ist, die bei Drehantrieb von dem Verbrennungsmotor (11) her geschlossen und bei Drehantrieb von der Trennkupplung (5) her geöffnet ist.

2. Parallelhybridantrieb nach Anspruch 1, dadurch gekennzeichnet, daß die elektrische Maschine (7) als Permanentmagnet-Läufermaschine ausgebildet ist, deren Permanentmagnetläufer (27) die drehrichtungsgeschaltete Kupplung (9) umschließt.

3. Parallelhybridantrieb nach Anspruch 2, dadurch gekennzeichnet, daß der Permanentmagnetläufer (27) ein Außenläufer ist, der einen Ständer (31) der elektrischen Maschine (7) radial außen umschließt.

4. Parallelhybridantrieb nach einem der Ansprüche 1 bis 3, dadurch gekennzeichnet, daß die drehrichtungsgeschaltete Kupplung (9) durch eine steuerbare Überbrückungskupplung (23) überbrückbar ist.

5. Parallelhybridantrieb nach Anspruch 4, dadurch gekennzeichnet, daß die Überbrückungskupplung (23) als Formschlußkupplung ausgebildet ist.

6. Parallelhybridantrieb nach Anspruch 4 oder 5, dadurch gekennzeichnet, daß die Überbrückungskupplung (23) als schaltbarer Freilauf ausgebildet ist, dessen Freilaufdrehsinn dem Freilaufdrehsinn der drehrichtungsschaltbaren Kupplung entgegengesetzt ist.

7. Parallelhybridantrieb nach einem der Ansprüche 4 bis 6, dadurch gekennzeichnet, daß die Überbrückungskupplung (23) für den Anlaßbetrieb oder/und Motorbremsbetrieb des Verbrennungsmotors (11) in ihre die drehrichtungsgeschaltete Kupplung (9) überbrückende Stellung schaltbar ist.

8. Parallelhybridantrieb nach einem der Ansprüche 1 bis 3, dadurch gekennzeichnet, daß die drehrichtungsabhängige Kupplung (9) als in seiner Sperrichtung umschaltbarer oder in eine vollständig blockierende Stellung schaltbarer Freilauf ausgebildet ist.
